**Europäisches Patentamt**

(19) **European Patent Office**

**Office européen des brevets**

(11) Numéro de publication: **0 111 612
B1**

(12) **FASCICULE DE BREVET EUROPEEN**

(45) Date de publication du fascicule du brevet:
**24.06.87**

(21) Numéro de dépôt: **82430038.8**

(22) Date de dépôt: **26.11.82**

(51) Int. Cl.⁴: **H 04 B 1/66, H 04 B 14/04**

(54) Procédé et dispositif de codage d'un signal vocal.

(43) Date de publication de la demande:
**27.06.84 Bulletin 84/26**

(45) Mention de la délivrance du brevet:
**24.06.87 Bulletin 87/26**

(84) Etats contractants désignés:
**DE FR GB**

(56) Documents cités:
**EP - A - 0 002 998
EP - A - 0 064 119**

**FUNKSCHAU, vol. 45, no. 16, 3 août 1973, pages 591-593, Munich DE., H. SCHÖNFELDER: "Nachrichtenreduktion für Bildsignale"
IEEE TRANSACTIONS ON COMMUNICATIONS, vol. COM-28, no. 1, janvier 1980, pages 136-138, IEEE, New York, USA, J.D. JOHNSTON et al.: "Digital transmission of commentary-grade (7kHz) audio at 56 or 64 kbits/s"**

(73) Titulaire: **International Business Machines Corporation, Old Orchard Road, Armonk, N.Y. 10504 (US)**

(84) Etats contractants désignés: **DE GB**

(73) Titulaire: **Compagnie IBM FRANCE, 5 Place Vendôme, F-75000 Paris 1er (FR)**

(84) Etats contractants désignés: **FR**

(72) Inventeur: **Galand, Claude, 56 avenue des Tuilières "Les Hauts de Bréguières, F-06800 Cagnes/Mer (FR)**
Inventeur: **Daulasim, Khamphuc, Bat.A1, HLM Saint Hermentaire, F-83300 Draguignan (FR)**

(74) Mandataire: **Tubiana, Max, Compagnie IBM France Département de Propriété Industrielle, F-06610 La Gaude (FR)**

## Description

### Domaine Technique de l'Invention

La présente invention traite d'un procédé de codage du signal vocal et plus précisément d'un procédé de codage numérique à des taux de bits relativement faibles.

### Etat de la Technique

Les opérations de traitement d'un signal variable dans le temps, qu'elles soient destinées à permettre l'enregistrement, la transmission, ou la modification dudit signal pour les besoins de l'application, peuvent être réalisées soit analogiquement, soit numériquement. Le traitement analogique suppose en général l'emploi de moyens encombrants et onéreux. On lui préfère souvent les techniques numériques, bien qu'elles impliquent au préalable, la conversion en numérique du signal à traiter. Pour obtenir cette conversion, le signal est tout d'abord échantillonné, puis quantifié, pour être exprimé en valeurs numériques codées en binaire. Cela suppose, évidemment, en fin de traitement, un décodage du signal ramenant l'information sous forme analogique, donc intelligible à l'homme. Mais codage et décodage altèrent l'information. On dit qu'ils introduisent des bruits, tel que le bruit de quantification par exemple. La réduction de ces bruits peut être obtenue par une quantification aussi précise que possible. Or, lors de la réalisation des opérations de quantification, tous les échantillons dont l'amplitude se situe entre deux niveaux d'amplitudes consécutifs, sont traduits par une même valeur numérique. Il en résulte naturellement une imprécision de transcription d'autant plus importante que le nombre de valeurs numériques utilisables pour le codage du signal est faible. Il semble donc indispensable d'accroître ce nombre, donc d'utiliser un taux de bits de codage plus élevé pour améliorer les qualités du codage. Ceci est fort regrettable car il en résulte, le cas échéant, un encombrement des canaux destinés à véhiculer ces bits, des mémoires destinées à les stocker et/ou des circuits destinés à les traiter, ce qui a une incidence directe sur le coût du matériel.

De nombreuses solutions ont été proposées pour améliorer la qualité du codage tout en minimisant le nombre ou taux de bits requis. Pour ce faire, le signal préalablement échantillonné et codé de manière classique est recodé à un taux de bits inférieur. On parle alors de compression de l'information par recodage. Comme en outre on tire ici bénéfice des propriétés spécifiques de la voix humaine, les techniques développées s'appliquent plus particulièrement à la compression de la voix.

Parmi les procédés de compression de la voix plus précisément concernés par la présente invention, on notera notamment ceux ayant fait l'objet du brevet européen 0 002 998 intitulé: «Procédé de compression de données relatives au signal vocal et dispositif mettant en œuvre ledit procédé». On en retiendra surtout ici que le signal d'origine est d'abord débarrassé d'une partie de sa redondance pour fournir un signal résiduel dont la bande basses fréquences ou bande de base est subdivisée en plusieurs sous-bandes dont les contenus sont requantifiés dynamiquement.

Un procédé semblable a en outre été décrit par D. Esteban, C. Galand, D. Mauduit et J. Menez dans les «IEEE Proceedings of the International Conference on Acoustics, Speech and Signal Processing» de Tulsa, Oklahoma, April 10–23, 1978, sous le titre: «9.6/7.2 Kbps Voice Excited Predictive Coder (VEPC).

A ceci vient s'ajouter la demande de brevet européen No. EP-A 0 070 948 publiée le 09.02.1983 sous le titre: «Procédé de Codage de la Voix et Dispositif de Mise en Œuvre dudit Procédé». On y indique qu'un découpage de la bande de base convenablement choisi permet d'obtenir, dans chaque sous-bande, un signal présentant une forte corrélation qui peut donc en principe, être codé à l'aide d'un taux de bits relativement réduit.

Un autre procédé fournissant dans chaque sous-bande un signal fortement corrélé a aussi été décrit dans une présentation faite par C. Galand, K. Daulasim et D. Esteban à l'ICASSP de 1982 à Paris, sous le titre «Adaptive Predictive Coding of Base-Band Speech Signals». Le signal de chaque sous-bande est soumis à un codage par codeur prédictif agissant sur le signal résiduel en bande de base du signal vocal. Ce dernier procédé fournit des résultats acceptables à condition d'être appliqué à des tronçons de signaux voisés relativement cours (inférieurs à 30 ms).

La présente invention permet d'améliorer sensiblement les qualités du mode de codage décrit dans le brevet européen 0 002 998 et de fournir un codeur permettant de traiter à la fois les signaux voisés et non voisés sans avoir à identifier formellement le caractère voisé ou non voisé du signal traité. Connaissant les difficultés rencontrés en pratique pour déceler le caractère voisé ou non voisé d'un signal vocal, l'homme de l'art appréciera pleinement les nombreux avantages de cette invention.

Plus précisément, la présente invention a pour objet un procédé de codage du signal vocal dans lequel ledit signal est tout d'abord traité pour en déduire un signal résiduel en bande de base, lequel est ensuite réparti entre plusieurs sous-bandes et recodé dans chaque sous-bande au moyen d'un procédé comprenant: un recodage simultané en direct (PCM) et en différentiel (APC) du signal égalisé avec allocation dynamique des bits de quantification; et, un choix dynamique de la sortie du recodeur entraînant l'erreur de recodage la plus faible.

D'autres objets, caractéristiques et avantages de la présente invention ressortiront mieux de l'exposé qui suit, fait en référence aux dessins annexés à ce texte, qui représentent un mode de réalisation préféré de celle-ci.

2

## Brève Description des Figures

La fig. 1A est un émetteur de l'art antérieur utilisant un codeur de type VEPC.

La fig. 1B représente le récepteur à associer à l'émetteur de la figure 1A.

La fig. 2 est le schéma d'une partie du codeur de la figure 1A destiné à incorporer l'invention.

Les fig. 3 et 4 sont des schémas de principe montrant des modes de réalisation de l'invention.

Les fig. 5 et 8 sont des modes de réalisation des codeurs et décodeurs APC et de certains de leurs composants destinés aux dispositifs représentés sur les figures 3 et 4.

Les fig. 9 et 10 sont des schémas de modes de réalisation des éléments 37 et 37-1 des figures 3 et 4.

Les fig. 11 et 12 représentent un autre mode de réalisation des éléments 37 et 37-1.

La fig. 13 est un schéma de principe d'un mode de réalisation de l'invention.

La fig. 14 est un format de disposition des bits obtenus à la sortie d'un émetteur réalisé selon l'invention.

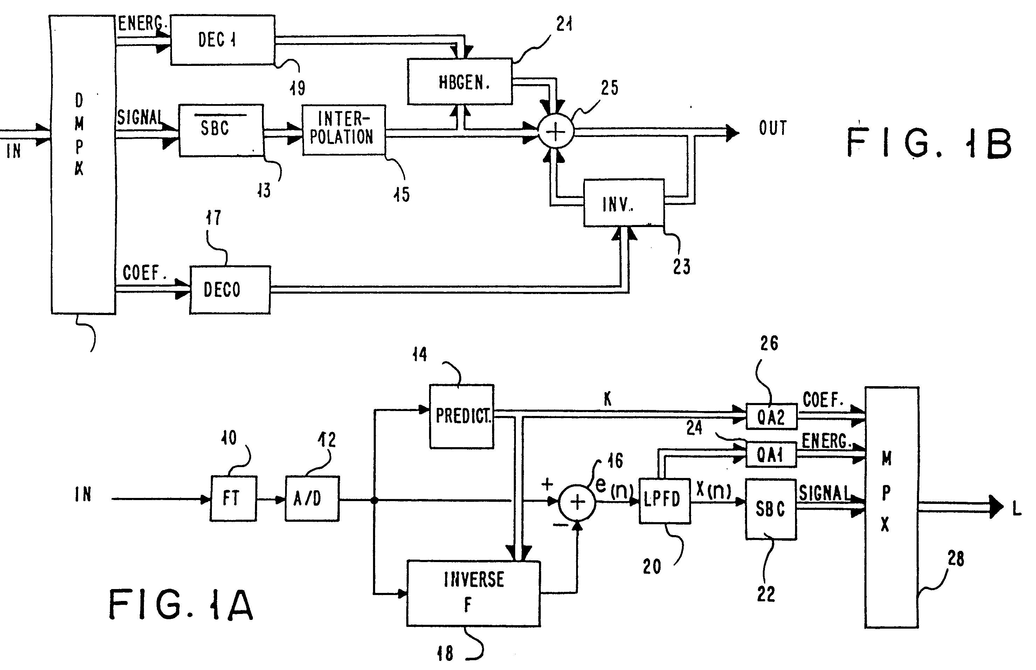

On a représenté sur la figure 1A, un émetteur comprenant un codeur du type prédictif (VEPC) du genre décrit dans l'art antérieur cité plus haut et notamment dans le brevet européen 0 002 998 et dans la présentation de Tulsa. Certaines caractéristiques du codeur ont naturellement été légèrement modifiées de manière à assurer un rendement optimal du système de codage de la présente invention.

Le signal vocal est appliqué sur l'entrée IN du codeur. Il est filtré en 10 à l'aide d'un filtre passé-bas (FT) transmettant à un convertisseur analogique-numérique (A/D) 12 un signal compris dans la bande de fréquences dite téléphonique (fréquences $\leqslant$ 3400 Hz). Dans le convertisseur 12, le signal est échantillonné à 8 KHz et codé en PCM à 12 bits. Les échantillons codés en PCM sont ensuite recodés. Pour ce faire ils sont tout d'abord envoyés à la fois dans un prédicteur de paramètres (PREDICT) 14, dans un soustracteur 16 et dans un filtre inverse (INVERSE F) 18. Le prédicteur 14 déduit du signal qu'il reçoit un groupe de coefficients dits d'autocorrélation partielle ou PARCOR (K) servant à ajuster le filtre inverse 18. Le filtre inverse est réalisé selon le réseau maillé tel qu'il a été défini par J.D. Markel et al dans leur ouvrage intitulé: «Linear Prediction of Speech» au paragraphe 5.4. Le signal fourni par le filtre inverse 18 représente en fait la partie prévisible du signal vocal. Le soustracteur 16, retranchant du signal fourni par le convertisseur 12 le signal issu du filtre inverse 18, fournit un signal dit résiduel $e_{(n)}$ dépourvu d'une partie de la redondance du signal vocal d'origine. Le signal résiduel $e_{(n)}$ est filtré dans un filtre passe-bas décimateur (LPFD) 20. Le dispositif 20 fournit d'une part les échantillons $X_{(n)}$ d'un signal dit résiduel en bande de base dont le spectre est limité à une bande de fréquences 300 à 1000 Hz par exemple et d'autre part une information relative à l'énergie du signal contenu dans la bande de fréquences hautes éliminée par le filtre 20. Le signal résiduel en bande de base est soumis à un codage en sous-bandes dans un dispositif (SBC) 22. Ce dernier dispositif procède à une requantification de type à allocation dynamique des bits de quantification et délivre une information désignée par SIGNAL. L'énergie de la bande de fréquences hautes (1000–3400 Hz par exemple) du signal résiduel est requantifiée en 24 (QA1) pour fournir une information désignée par ENERG (ou E). Quant aux coefficients d'autocorrélation partielle dits aussi coefficients PARCOR, ils sont recodés par requantification en 26 (QA2) pour fournir une information désignée par COEF (ou K). Ces trois types d'informations, à savoir COEF (K), ENERG (E) et SIGNAL constituent une représentation codée caractérisant pleinement le signal vocal soumis à l'entrée IN du codeur. Leur transmission sur une ligne L est réalisée à l'aide d'un multiplexeur 28.

On rappellera tout d'abord que le système travaillant en BCPCM, le traitement du signal vocal se fait sur des blocs d'échantillons représentant des tronçons de signal consécutifs de 20 millisecondes (ms).

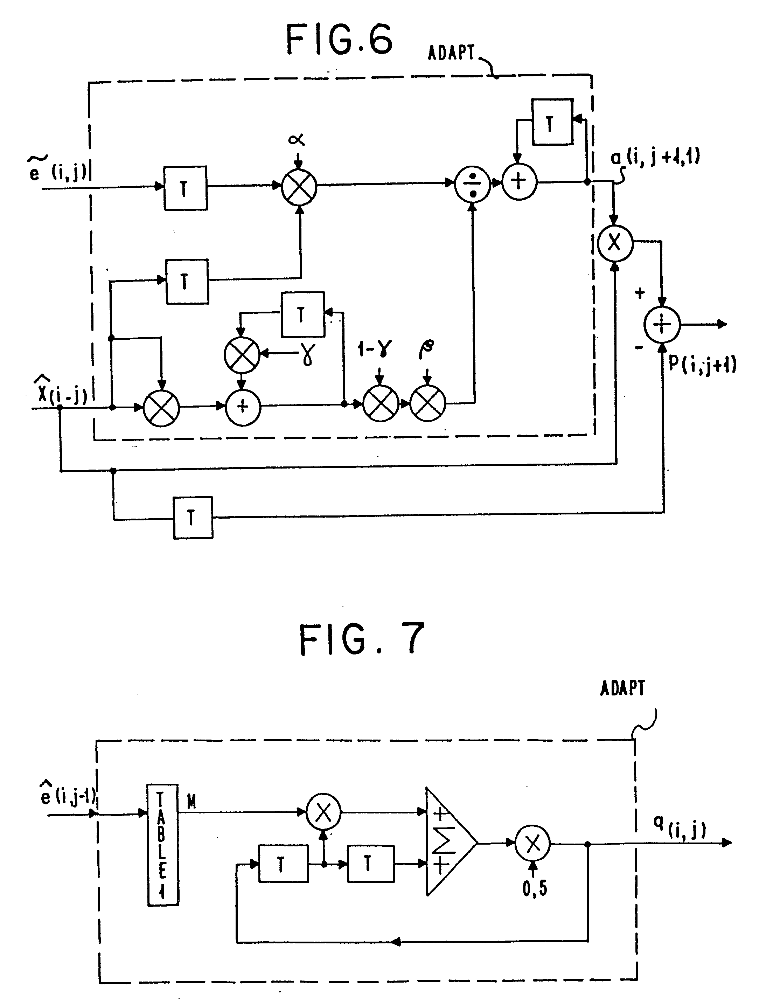

Le dispositif 14 prédicteur de paramètres a été décrit en détail notamment dans le brevet européen 0 002 998 et plus précisément aux figures 6 et 7 dudit brevet. La méthode sur laquelle est basé le dispositif met notamment en œuvre les algorithmes proposés par J. Le Roux et C. Gueguen dans un article publié par IEEE Transactions on Acoustics, Speech and Signal Processing de juin 1977.

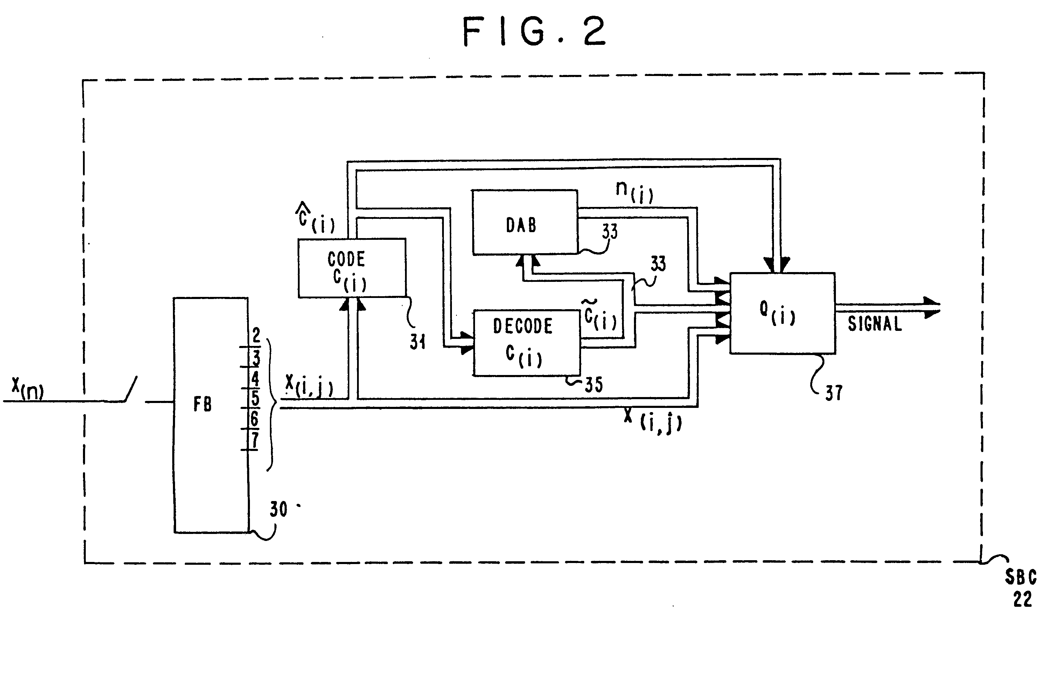

Le dispositif 20 comporte un filtre numérique passe-bas dont la fréquence limite supérieure est $\leqslant$ 1000 Hz. Le signal résiduel en bande de base représenté par les échantillons $X_{(n)}$ peut donc être ré-échantillonné à 2 KHz. Ce ré-échantillonnage est réalisé en pratique par une opération dite de décimation qui consiste en l'abandon périodique de certains échantillons. Le dispositif 20 comporte en outre les moyens permettant de mesurer l'énergie (E) contenue dans la bande hautes fréquences 1000–3400 Hz éliminée par le filtre passe-bas du dispositif 20. Un mode de réalisation du dispositif 20 a été décrit dans le brevet européen 0 002 998 (voir notamment la figure 2 dudit brevet). On y remarquera en outre la présence des moyens de décimation chargés de ramener la fréquence d'échantillonnage du signal à une valeur inférieure à celle d'origine.

On a représenté sur la figure 1B le récepteur qui, placé à l'autre extrémité de la ligne L reconstruirait le signal vocal d'origine. Un démultiplexeur (DMPX) 11 traite l'information reçue de manière à séparer les uns des autres les composants ENERG, SIGNAL et COEF. Les données de SIGNAL sont décodées en 13 (SBC) puis soumises à des opérations d'interpolation en 15 destinées à ramener la fréquence d'échantillonnage du signal à sa valeur d'origine. Parallèlement à ces opérations, les données COEF et ENERG sont respectivement décodées en 17 (DEC0) et 19

(DEC1). Les données sortant de l'interpolateur 15 et celles décodées en 19 servent à reconstituer en 21 (HBGEN) la bande hautes fréquences qui avait été éliminée par le filtre 20. Les coefficients fournis par le décodeur 17 servent à accorder un filtre 23 (INV) dont la sortie est additionnée en 25 aux données fournies par l'interpolateur 15 et le générateur de bande haute 21. L'additionneur 25 fournit les données qui après conversion en analogique (non représentée) restitue une reproduction du signal vocal non comprimé d'origine.

On a représenté sur la figure 2, un schéma du codeur en sous-bandes 22. On y trouve un banc de filtres (FB) 30 auquel sont appliqués les échantillons $X_{(n)}$. Ce banc de filtres découpe la bande passante du signal résiduel en bande de base en huit sous-bandes adjacentes numérotées de 1 à 8. Seules les sous-bandes 2 à 7 sont conservées pour les besoins de l'invention. Le banc de filtres FB fournit des signaux de sous-bandes dont les échantillons sont désignés par $X_{(i,j)}$ où $i = 2, 3, \ldots, 7$ est l'indice de sous-bande et $j = 1, 2, \ldots, N$ définit le rang de l'échantillon considéré au sein d'un bloc de N échantillons. Les échantillons de chaque sous-bande sont soumis à un codeur de termes caractéristiques 31. Ce dispositif a deux fonctions. La première consiste à trier les échantillons de chaque sous-bande pour en déduire le terme caractéristique $C_{(i)}$ au sens du codage en BCPCM. Autrement dit

$$c_{(i)} = \text{Max}\, (|X_{(i,j)}|)\ \text{pour}\ j = 1, 2, \ldots, N \qquad (1)$$

(Voir la présentation de A. Croisier au Séminaire International de Communications Numériques de 1974 à Zurich sous le titre: «Progress in PCM Delta Modulation: Block Comparded Coding of Speech Signal» (BCPCM). Le second rôle du codeur de caractéristiques 31 est de transcoder les termes $C_{(i)}$ de 12 bits en 4 bits à l'aide d'une table de conversion définie selon une fonction logarithmique. Les termes $C_{(i)}$ transcodés sont désignés par $\hat{C}_{(i)}$. Les termes caractéristiques sont soumis à un dispositif d'allocation dynamique de bits (DAB) 33. En pratique, le dispositif (DAB) 33 utilise des termes décodés en 35 désignés par $\tilde{C}_{(i)}$. Le dispositif 33 détermine dynamiquement pour chaque bloc d'échantillons traités le taux de bits $n_{(i)}$ à allouer à la requantification des échantillons de la $i^{\text{ième}}$ sous-bande, à l'aide de la formule suivante:

$$n_{(i)} = \frac{1}{p}\, [M - \sum_{j=2}^{7} \log_2 \tilde{C}_{(j)}] + \log_2 \tilde{C}_{(i)}$$

où
M représente le nombre total de bits à distribuer sur $p = 6$ sous-bandes. En fait, cette formule conduit en général à des valeurs non entières pour $n_{(i)}$, qui peuvent d'ailleurs devenir négatives. Ces valeurs doivent donc être ajustées à l'aide d'un algorithme de re-allocation tel que celui décrit dans le brevet européen 0 002 998.

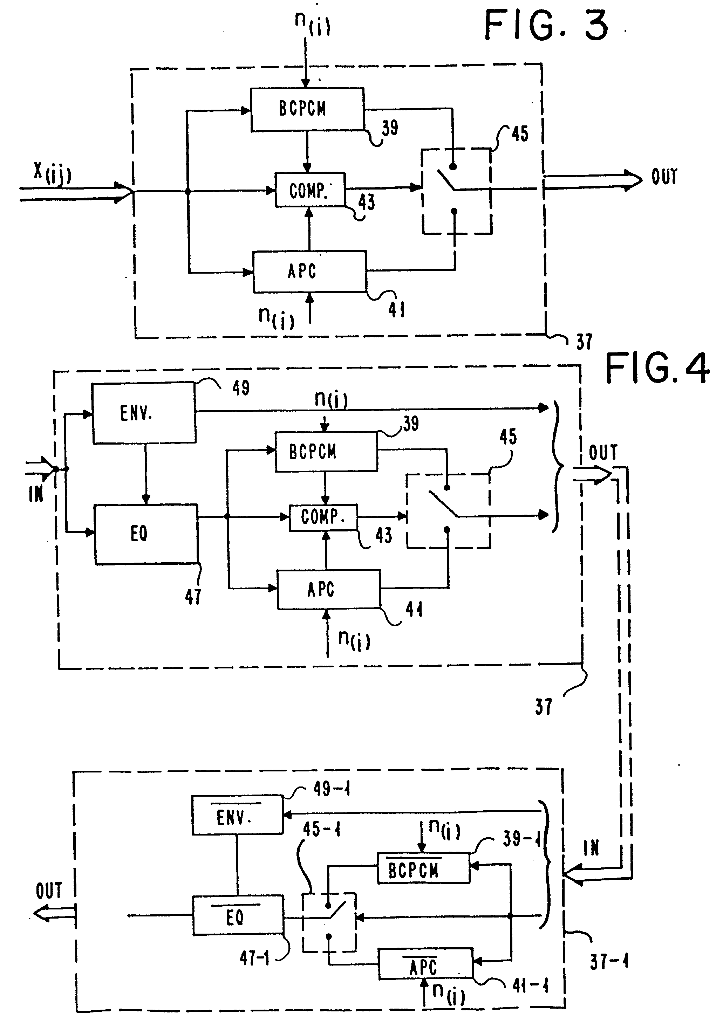

Les termes $X_{(i,j)}$ peuvent alors être requantifiés de manière plus rationnelle. C'est ce que fait le dispositif 37. Pour parfaire cette requantification ou plus précisément le codage des termes $X_{(i,j)}$ on a choisi ici de les soumettre simultanément à deux codeurs comme le montre le schéma de principe de la figure 3. L'un des codeurs 39 est dit direct (type BCPCM notamment), il requantifie les échantillons de sous-bandes en appliquant la relation:

$$\hat{X}_{(i,j)} = ||\frac{X_{(i,j)}}{\tilde{C}_{(i)}} \cdot 2^{n_{(i)}-1}|| \qquad (2)$$

où
$j = 1, \ldots, N$
$i = 2, \ldots, 7$
$||\times||$ indique que le terme entre les barres verticales est tronqué à sa valeur entière par défaut.

L'autre codeur 41 est du type différentiel ou plus précisément ici, de type dit APC (Adaptive Predictive Coder). Les résultats des deux codeurs sont en permanence comparés entre eux en 43. Cette comparaison sert à choisir le codeur sur lequel le commutateur de sortie 45 doit être positionné.

En agissant ainsi, on tire avantage des caractéristiques spécifiques des sons voisés et non voisés sans avoir à les identifier comme tels, et sans être lié rigidement à la propriété voisée/non voisée puisque chaque sous-bande sera traitée séparément. En effet le gain apporté par un codage prédictif d'ordre 2 peut être très important lorsque les signaux de sous-bandes résultent de l'analyse d'un son de type voisé. Tandis que ce gain est théoriquement nul lorsque les signaux de sous-bandes sont peu corrélés comme par exemple cela est le cas pour les sons non voisés. Le gain de prédiction dans une sous-bande peut également devenir très faible lorsque cette sous-bande contient un signal de fréquence proche de l'une de ses fréquences limites. Dans ce cas, la fréquence du signal après re-échantillonnage (décimation) peut être proche de la fréquence de Nyquist et le signal ré-échantillonné présente alors une faible corrélation au premier ordre. Lorsque le gain de prédiction devient trop faible, le gain de codage résultant de l'utilisation d'un prédicteur par rapport à la quantification directe (type BCPCM) du signal, peut devenir négatif. Ceci est d'autant plus vrai que l'on utilisera un quantificateur à nombre restreint de bits (1 à 3 par exemple). Il est dans ce cas préférable d'utiliser un codage direct. On verra même plus loin que l'on améliorera encore les qualités du codage en re-allouant aux sous-bandes traitées directement (BCPCM) les bits de quantification alloués par le dispositif d'allocation dynamique 33 et non utilisés par les codeurs des sous-bandes travaillant en différentiel (APC).

Un dispositif réalisant les opérations inverses de celles schématisées sur la figure 3, sera naturellement nécessaire pour reconstituer le signal vocal d'origine à partir du signal comprimé selon le procédé de la présente invention.

On a représenté en outre sur la figure 4 une variante du codeur de la figure 3 ainsi que le dispositif qui, au décodage, réaliserait les opérations inverses de celles effectuées dans le dispositif 37. La différence entre le codeur de la figure 3 et celui de la figure 4 tient au fait que, pour ce qui concerne la figure 4, avant d'être soumis au codeurs 39 et 41, le signal à coder est égalisé en amplitude (EQ) en 47 en utilisant son enveloppe (ENV) déterminée à l'aide du dispositif 49. En agissant ainsi, on améliore notamment le rendement du codage différentiel. Pour la reconstitution du signal réel, par exemple à l'extrémité de réception d'une ligne de transmission, on aurait alors non seulement les décodeurs 39-1, 41-1 associés au commutateur 45-1, mais aussi un dispositif 49-1 recalculant l'enveloppe du signal et permettant de moduler le signal en 47-1. On notera que les barres utilisées au décodage au-dessus des indications de fonction des boites du schéma traduisent le fait que les opérations réalisées dans ces boîtes sont les opérations inverses de celles réalisées lors du codage. Le décodage des échantillons codés en BCPCM obéit à la relation:

$$\tilde{X}_{(i,j)} = [\tilde{C}_{(i)}/2^{n_{(i)}-1}] \cdot (\tilde{X}_{(i,j)} + 0,5) \qquad (3)$$

où
$j = 1, \ldots, N$ et
$i = 2, \ldots, 7$.

Pour plus de précisions sur les codages et décodages en BCPCM, on se reportera aux schémas du brevet européen 0 002 998.

A titre d'exemple, on pourra réaliser le codage en donnant aux paramètres les valeurs suivantes:

| | |
|---|---|
| Longueur de chaque tronçon de signal fournissant un bloc d'échantillons | 20 ms |
| Nombre de sous-bandes utiles | $p=6$ |
| Nombre d'échantillons par sous-bande et par bloc | $N=5$ |
| Nombre de bits à distribuer pour le codage d'un échantillon de chacune des six sous-bandes | $M=15$ |
| Nombre de bits moyen par échantillon d'une sous-bande | $<n_{(i)}> = M/p = 2,5$ |

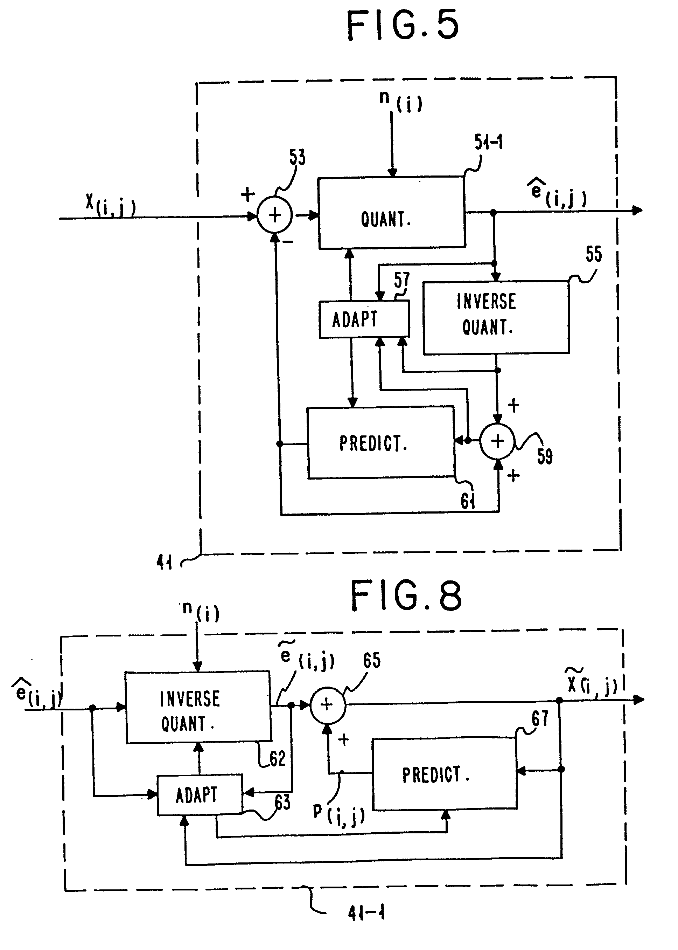

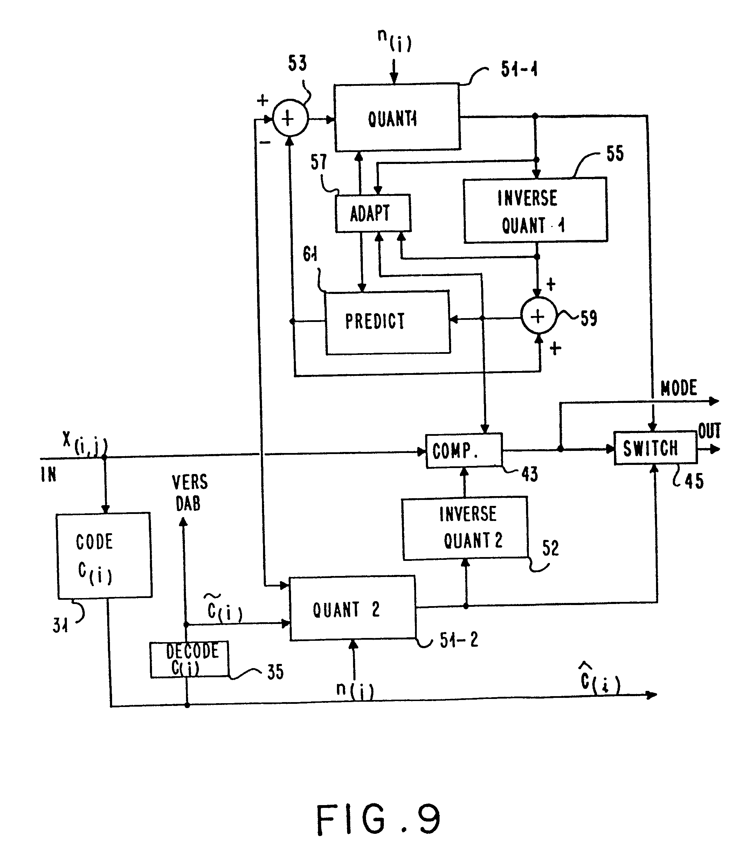

Quant aux codage et décodage de type prédictif et adaptatif, on les réalise selon les schémas de principe des figures 5 et 8. Pour ce qui est du codage, dans chaque sous-bande, les échantillons $X_{(i,j)}$ du signal à requantifier sont appliqués à un quantificateur 51-1 à travers un soustracteur 53. Le signal sortant du quantificateur 51-1 est soumis à un quantificateur inverse 55 et à un dispositif d'adaptation 57. La sortie du quantificateur inverse 55 est reliée à la fois au dispositif d'adaptation 57 et à un additionneur 59. La seconde entrée de l'additionneur 59 est reliée à la sortie d'un prédicteur 61 dont l'entrée est connectée à la sortie de l'additionneur 59. La sortie de l'additionneur 59 est aussi reliée à l'une des entrées de l'adaptateur 57. La sortie du prédicteur 61 est en outre reliée à l'entrée négative du soustracteur 53. Le dispositif d'adaptation 57 fournit des informations destinées à permettre les adaptations des quantificateur 51-1 et prédicteur 61.

Le fonctionnement du dispositif de codage de la figure 5 est basé sur les techniques de prédiction adaptative séquentielle telles que définies notamment dans un article de D. Cohn et J. Melsa publié dans IEEE Trans. On Communications Vol. COM-23, No. 9, pages 935-941, septembre 1974, sous le titre: «The Residual Encoder — An Improved ADPCM System for Speech Digitization». Les coefficients de prédiction ne sont plus ici déterminés à partir de la connaissance d'un bloc complet d'échantillons comme cela était le cas pour la méthode d'auto-corrélation utilisée dans le VEPC. Ils sont, au contraire, adaptés à chaque instant d'échantillonnage en se basant sur les informations recueillies à partir de la reconstruction d'échantillons prédits précédemment. L'indice «j» de rang d'échantillon est donc pour le codeur de type prédictif à considèrer indépendamment du concept de bloc où j est limité à N.

Comme le montre la figure 5, un échantillon prédit $p_{(i,j)}$ est soustrait en 53, de l'échantillon d'entrée $X_{(i,j)}$ pour fournir un échantillon résiduel de prédiction de sous-bande

$$e_{(i,j)} = X_{(i,j)} - p_{(i,j)} \qquad (4)$$

L'information $e_{(i,j)}$ est aussi dite erreur de prédiction. Cette erreur, après quantification en 51-1, fournit des échantillons résiduels de prédiction de sous-bande quantifiés $\hat{e}_{(i,j)}$. On admettra pour l'instant que le quantificateur 51-1 a un pas déterminé pour chaque bloc d'échantillons à quantifier, en fonction du terme $n_{(i)}$ qui est fourni par le dispositif d'allocation dynamique de bits (DAB) 33, selon le procédé décrit dans le brevet européen 0 002 998. Ce sont les échantillons résiduels quantifiés $\hat{e}_{(i,j)}$ qui constitueront l'information SIGNAL pour les sous-bandes dans lesquelles le commutateur 45 aura été placé sur la sortie du codeur prédictif APC (voir figure 4). Les échantillons $\hat{e}_{(i,j)}$ sont en outre soumis à une opération de quantification inverse en 55 fournissant des échantillons résiduels de prédiction de sous-bandes reconstitués $\tilde{e}_{(i,j)}$. Les termes $\tilde{e}_{(i,j)}$ ajoutés aux échantillons prédits $p_{(i,j)}$ reconstituent des échantillons d'entrée $\tilde{X}_{(i,j)}$. Les échantillons prédits $p_{(i,j)}$ obéissent à la relation:

$$p_{(i,j)} = \sum_{k=1}^{2} a_{(i,j,k)} \cdot \tilde{X}_{(i,j-k)}$$

$$= a_{(i,j,1)} \tilde{X}_{(i,j-1)} + a_{(i,j,2)} \cdot \tilde{X}_{(i,j-2)} \qquad (5)$$

où
$a_{(i,j,k)}$ représente la valeur du $k^{ième}$ coefficient du prédicteur 61 à l'instant j pour la $i^{ième}$ sous-bande.

Ces coefficients sont adaptés à chaque instant d'échantillonnage, à l'aide de la méthode du gradient:

$$a_{(i, j+1, k)} = a_{(i, j, k)} - \alpha \cdot \frac{\delta \tilde{e}^2_{(i, j)}}{\delta a_{(i, j, k)}}$$

On peut montrer que:

$$\frac{\delta \tilde{e}^2_{(i, j)}}{\delta a_{(i, j, k)}} = -2 \tilde{X}_{(i, j-k)} \cdot \tilde{e}_{(i, j)}$$

Le choix suivant permet d'éviter des divisions par des nombres trop faibles quand l'énergie du signal diminue trop.

$$a_{(i, j+1, k)} = a_{(i, j, k)} + \frac{\alpha \cdot \tilde{X}_{(i, j-k)} \cdot \tilde{e}_{(i, j-1)}}{\beta + (1-\gamma) \cdot \sum_{l=0}^{\infty} \gamma^l \cdot \tilde{X}^2_{(i, j-l)}} \qquad (6)$$

On peut montrer que pour un signal sinusoïdal de pulsation $\omega$, les coefficients du prédicteur convergent vers les valeurs:

$$a_{(i, j, 1)} = 2 \cos \omega T$$
$$a_{(i, j, 2)} = -1$$

où
T est la période d'échantillonnage du signal.

Dans le cas présent, où les signaux de sous-bandes sont obtenus par l'analyse de la bande de base, on constate que la convergence est beaucoup plus rapide, en prenant $a_{(i, j, 2)} = -1$ et en adaptant $a_{(i, j, 1)}$ à l'aide de la relation (6).

En pratique, on utilisera plutôt la formule (7) ci-dessous:

$$a_{(i, j+1, 1)} = a_{(i, j, 1)} + \frac{\alpha \cdot \tilde{X}_{(i, j-1)} \cdot \tilde{e}_{(i, j-1)}}{\beta + (1-\gamma) S_{(i, j)}} \qquad (7)$$

où $S_{(i, j)} = \gamma S_{(i, j-1)} + \tilde{X}^2_{(i, j)}$     (8)

et où on limite la valeur obtenue pour le coefficient $a_{(i, j+1, 1)}$ à l'intervalle ]-2, +2[ de façon à assurer la stabilité en prédicteur.

Les coefficient $\alpha$, $\beta$ $\gamma$ sont déterminés empiriquement pour que la convergence de la formule (7) se fasse rapidement. On a utilisé les termes:

$\alpha = 0,3$
$\beta = 0,01$
$\gamma = 0,7$

L'expression (5) peut donc s'écrire:

$$p_{(i, j+1)} = a_{(i, j+1, 1)} \cdot \tilde{X}_{(i, j)} - \tilde{X}_{(i, j-1)} \qquad (9)$$

Un schéma du prédicteur 61 associé à la partie du dispositif d'adaptation 57 correspondante est représenté sur la figure 6. Le fonctionnement du prédicteur obéit aux expressions (7) à (9). La partie de la figure 6 encadrée de pointillés représente la partie de l'adaptateur 57 chargée d'adapter le prédicteur 61. On notera cependant que comme on l'a indiqué plus haut, le terme $a_{(i, j+1, 1)}$ devra passer, à la sortie du dispositif ADAPT, par un circuit (non représenté) limitant les valeurs de $a_{(i, j+1, 1)}$ à l'intervalle ]-2, +2[. Le reste de la figure 6 appartient directement au prédicteur 61.

Les échantillons du signal résiduel de prédiction de sous-bande sont quantifiés à l'aide d'un quantificateur adaptatif. De par le principe même du codage différentiel, le pas de quantification non seulement dépend du nombre de bits $n_{(i)}$ alloué mais en outre doit être adapté à chaque instant d'échantillonnage. Cette adaptation est réalisée de façon récurrente par l'adaptateur 57. Autrement dit, le pas de quantification $q_{(i, j)}$ de la $i^{ème}$ sous-bande dépend de la valeur $q_{(i, j-1)}$ et de la valeur de l'échantillon résiduel de prédiction $\hat{e}_{(i, j-1)}$. Comme, dans le cas présent, le signal $e_{(i, j)}$ peut présenter des variations d'amplitude importantes dans le cas de variations rapides de la fréquence du signal fournissant les échantillons $X_{(i, j)}$, il faut choisir les paramètres d'adaptation du quantificateur de manière à ce que cette adaptation ne soit pas trop lente dans le cas d'une quantification à 2 ou 3 bits.

On a choisi la fonction d'adaptation suivante:

$$q_{(i, j)} = \frac{1}{2} [M.q_{(i, j-1)} + q_{(i, j-2)}] \qquad (10)$$

expression dans laquelle M a une valeur numérique prédéterminée qui dépend à la fois de la valeur du terme $\hat{e}_{(i, j-1)}$ et du nombre de bits alloués $n_{(i)}$.

Le dispositif d'adaptation 57 contiendra donc une table (voir Table I ci-dessous, par exemple) qui fournira M en fonction de $n_{(i)}$ et de $\hat{e}_{(i, j)}$.

Table I

| $\hat{e}_{(i, j-1)}$ | $n_{(i)} = 2$ M | $n_{(i)} = 3$ M | $n_{(i)} = 4$ M |
|---|---|---|---|
| 7 | | | 2,0 |
| 6 | | | 1,75 |
| 5 | | | 1,5 |
| 4 | | | 1,25 |
| 3 | | 1,7 | 1,1 |
| 2 | | 1,2 | 0,9 |
| 1 | 1,4 | 0,85 | 0,75 |
| 0 | 0,84 | 0,65 | 0,5 |
| -1 | 0,84 | 0,65 | 0,5 |
| -2 | 1,4 | 0,85 | 0,75 |
| -3 | | 1,2 | 0,9 |
| -4 | | 1,7 | 1,1 |
| -5 | | | 1,25 |
| -6 | | | 1,5 |
| -7 | | | 1,75 |
| -8 | | | 2,0 |

La figure 7 montre un mode de réalisation d'un dispositif fournissant $q_{(i,j)}$ pour $n_{(i)}=3$, conformément à la relation (10) et à la table I.

On a représenté sur la figure 8 le décodeur 41-1 de type prédictif correspondant au codeur de la figure 5. Les échantillons résiduels de prédiction $\hat{e}_{(i,j)}$ y sont soumis à l'opération de quantification inverse en 62. Les paramètres nécessaires à la quantification inverse sont fournis à la fois par le dispositif 33 d'allocation dynamique de bits (voir figure 2) et par un adaptateur 63. Le quantificateur inverse fournit les échantillons $\tilde{e}_{(i,j)}$. Ces échantillons sont envoyés sur un additionneur 65 dont la sortie fournit les échantillons de signal de sous-bande décodés $\tilde{X}_{(i,j)}$. La seconde entrée de l'additionneur reçoit les termes $p_{(i,j)}$ fournis par un prédicteur 67 dont l'entrée reçoit les termes $\tilde{X}_{(i,j)}$. Les dispositifs 63 et 67 sont semblables à ceux utilisés pour le codeur de la figure 5. Plus précisément, l'adaptateur 63 est semblable au circuit 57, tandis que le prédicteur 67 est semblable au prédicteur 61.

On a représenté sur la figure 9 un schéma plus détaillé d'un mode de réalisation du dispositif de la figure 3. Les échantillons $X_{(i,j)}$ des sous-bandes (voir figure 2) sont donc soumis simultanément à un codeur de type APC et à un codeur BCPCM. Le nombre du bits $n_{(i)}$ à allouer à la $i^{ème}$ sous-bande est déterminé à partir des termes $\tilde{C}_{(i)}$ à l'aide d'un dispositif DAB (non représenté) semblable au DAB 33 de la figure 2. Le codeur de type APC, représenté dans la partie supérieure de la figure 9, se compose des mêmes éléments que ceux décrits à propos de la figure 5. Sa sortie, fournit les échantillons reconstitués $\tilde{X}^{(1)}_{(i,j)}$ au comparateur 43.

Le codeur de type BCPCM est représenté dans la partie inférieure de la figure 9 et fournit au comparateur 43 les échantillons reconstitués en 52 à savoir $\tilde{X}^{(2)}_{(i,j)}$. Le comparateur 43 calcule pour chaque sous-bande la distorsion due à chacun des types de codage (APC et BCPCM) et choisit en 45 le type ou (mode) de codage de la meilleure qualité, c'est-à-dire fournissant la distorsion la plus faible. La distorsion introduite par chacun des codeurs est définie comme une mesure de l'écart entre le signal original $X_{(i,j)}$ et le signal reconsitué $\tilde{X}_{(i,j)}$, mesure basée sur le critère de l'erreur quadratique moyenne. La distorsion $D_{1,i}$ introduite par le codeur APC pour chaque bloc d'échantillons de la sous-bande i, est définie par l'expression:

$$D_{1,i} = \sum_{j=1}^{N} [X_{(i,j)} - \tilde{X}^{(1)}_{(i,j)}]^2$$

La distorsion $D_{2,i}$ introduite par le codeur BCPCM est égale à:

$$D_{2,i} = \sum_{j=1}^{N} [X_{(i,j)} - \tilde{X}^{(2)}_{(i,j)}]^2$$

Le comparateur 43 compare $D_{1,i}$ et $D_{2,i}$ et si $D_{1,i} < D_{2,i}$, le mode différentiel est choisi. Dans l'autre cas, c'est le mode direct.

Un bit dit de «mode» est associé à l'information SIGNAL pour identifier, dans chaque sous-bande, le codeur choisi.

Le comparateur 43 commute le dispositif 45 soit sur la sortie du quantificateur 51-1 associé au codeur de type différentiel (APC) et fournissant les termes $\hat{e}_{(i,j)}$, soit sur la sortie du quantificateur 51-2 associé au codeur de type BCPCM fournissant les termes $\hat{X}_{(i,j)}$. Il faudra aussi inclure à l'information SIGNAL les termes caractéristiques $C_{(i)}$. Enfin, le bit dit de mode, est lui aussi incorporé à l'information SIGNAL.

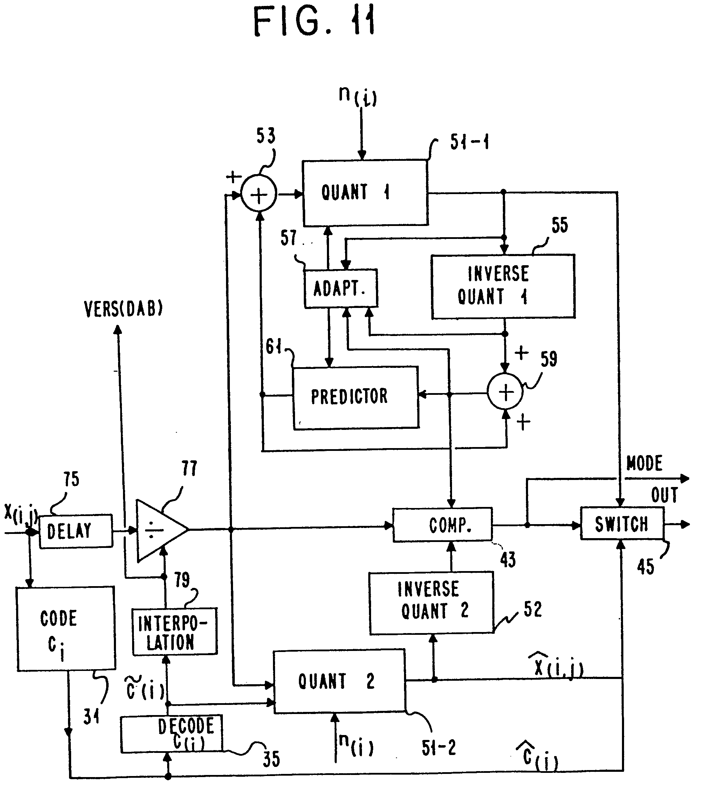

On a représenté sur la figure 10 un mode de réalisation d'un décodeur réalisant les opérations inverses de celles effectuées par le dispositif de la figure 9. Ce dispositif serait à inclure dans le décodeur 13 du dispositif de la figure 1B. Les données qui constituent $\hat{e}_{(i,j)}$, $\hat{X}_{(i,j)}$ et $\tilde{C}_{(i)}$ sont envoyées à l'un des deux quantificateurs inverses 62-1 et 62-2 dont les pas de quantification sont ajustés dynamiquement, à travers un commutateur 73-1 actionné par le bit de MODE.

Les termes caractéristiques, $\hat{C}_{(i)}$ inclus dans l'information SIGNAL sont quant à eux décodés puis utilisés pour recalculer à l'aide d'un dispositif DAB (non représenté) semblable à celui utilisé à l'émission, le nombre de bits $n_{(i)}$ à affecter à la $i^{ème}$ sous-bande.

Le quantificateur inverse 62-1 est semblable à celui de la figure 8. Le quantificateur inverse 62-2 est de type direct, c'est-à-dire qu'il effectue une opération du genre:

$$\tilde{X}_{(i,j)} = [\tilde{C}_{(i)}/2^n(i)-1] . [\hat{X}_{(i,j)} + 0,5] \qquad (11)$$

Un commutateur de sortie 73 est commuté soit sur le décodeur de la partie supérieure, soit sur celui de la partie inférieure de la figure 10, selon la valeur du bit dit de mode.

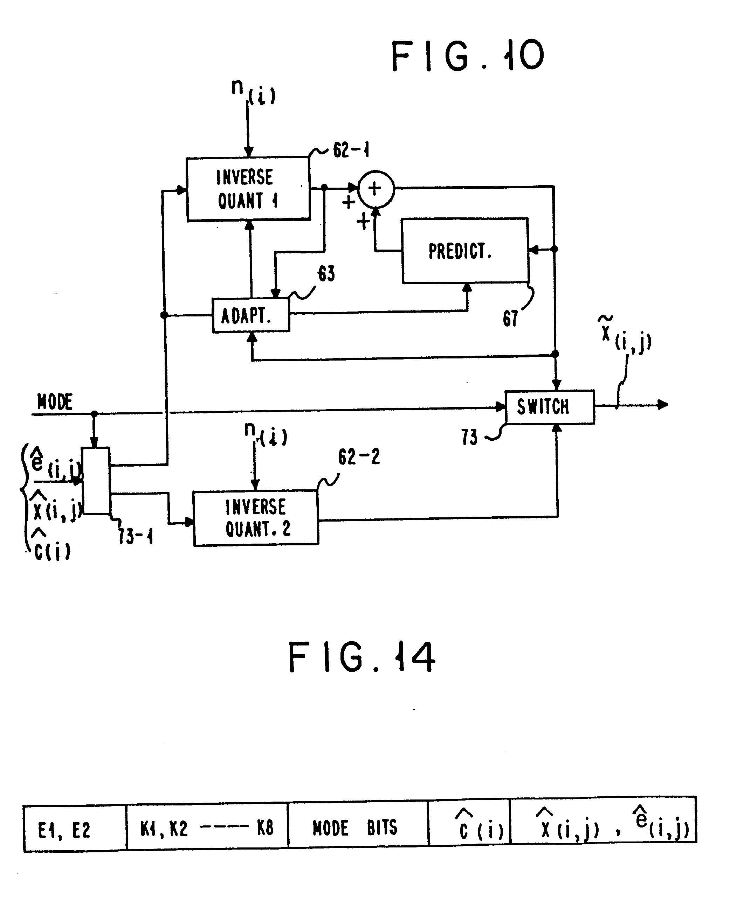

Les bonnes performances du codeur en sous-bandes de l'invention ont été rendues possibles par l'invention de moyens exploitant judicieusement les fortes corrélations des signaux de certaines sous-bandes pour les sons d'allure voisée. Ces performances peuvent néanmoins être encore améliorées par une égalisation de l'enveloppe des signaux traités. A priori, il est évident que cette opération d'égalisation exigera l'adjonction au codeur de moyens supplémentaires qui risquent d'alourdir le coût du codeur et de ralentir son fonctionnement. L'importance de ces inconvénients peut être amoindrie par l'utilisation judicieuse des moyens disponibles dans le codeur comme le montre la figure 11. Cette figure est semblable à celle de la figure 9. Le dispositif de la figure 11 comporte, outre les éléments décrits sur la figure 9 (et portant les mêmes références), des éléments (75, 77 et 79) destinés à l'égalisation des $X_{(i,j)}$ provenant des signaux de sous-bandes. Le dispositif 75 retarde simplement les échantillons $X_{(i,j)}$ pour compenser les effets dûs au temps nécessaire à la réalisation des opérations d'égalisation proprement dites. Ces dernières opérations utilisent un diviseur 77 dont le coefficient de division est défini par l'enveloppe du signal $X_{(i,j)}$. Un moyen relativement simple de détermination de ladite enveloppe est utilisé ici. Il consiste en un simple interpolateur linéaire 79 des coefficients caractéristiques $\tilde{C}_{(i)}$ fournis par le décodeur 35.

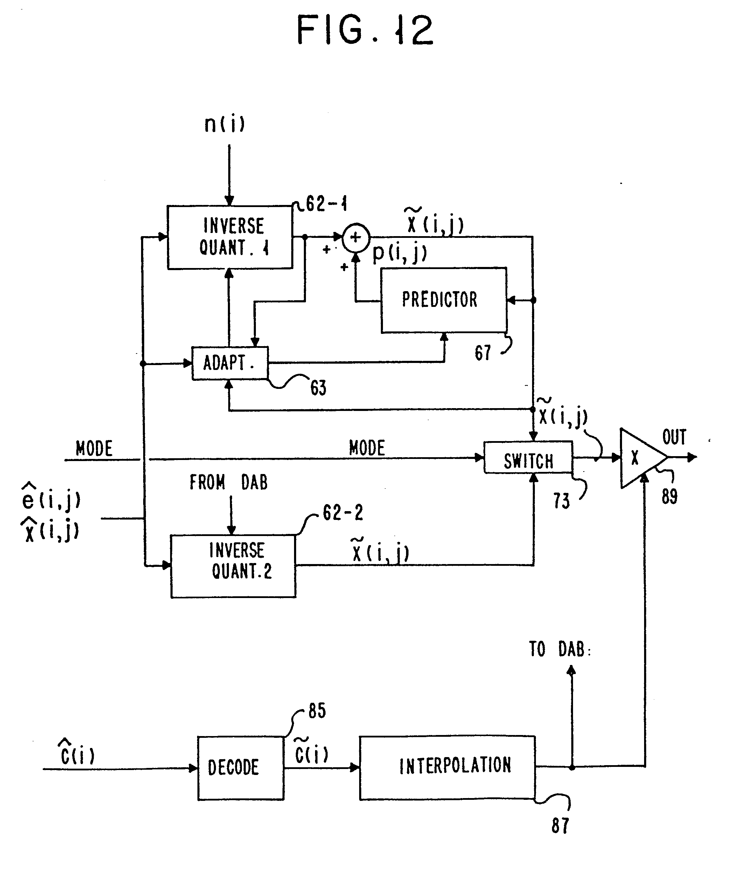

La figure 12 représente le décodeur à utiliser pour réaliser les opérations inverses de celles du dispositif de la figure 11. Ce décodeur est donc constitué des mêmes éléments que ceux de la figure 10 auxquels on a rajouté des circuits de modulation chargés de restituer le signal original, c'est-à-dire non égalisé. Les circuits de modulation commencent par reconstituer l'enveloppe de chaque signal de sous-bande par décodage en 85 des termes caractéristiques $\hat{C}_{(i)}$ et interpolation en 87 des $\hat{C}_{(i)}$ décodés, avant de mutiplier les échantillons décodés $\tilde{X}_{(i,j)}$ par cette enveloppe à l'aide du multiplieur 89.

On a indiqué plus haut que le codeur de l'invention permettait une meilleure allocation des bits de quantification par redistribution aux sous-bandes traitées en BCPCM de bits non utilisés par les quantificateurs des sous-bandes traitées en différentiel (APC). Plusieurs techniques peuvent être imaginées. Par exemple, on limitera le nombre de bits $n_{(i)}$ alloués à chaque sous-bande traitée en APC à une valeur prédéterminée $n_k$ ou mieux, on forcera le $n_{(i)}$ de ces sous-bandes à cette valeur. Dans ce cas, lorsque le $n_{(i)}$ fourni pour la $i^{ème}$ sous-bande par le dispositif DAB sera supérieur à $n_k$ on le forcera à cette valeur. Par contre lorsque le $n_{(i)}$ d'une sous-bande APC sera inférieur à $n_k$, on commutera la sous-bande sur le codeur direct (BCPCM) et on inversera le bit de MODE.

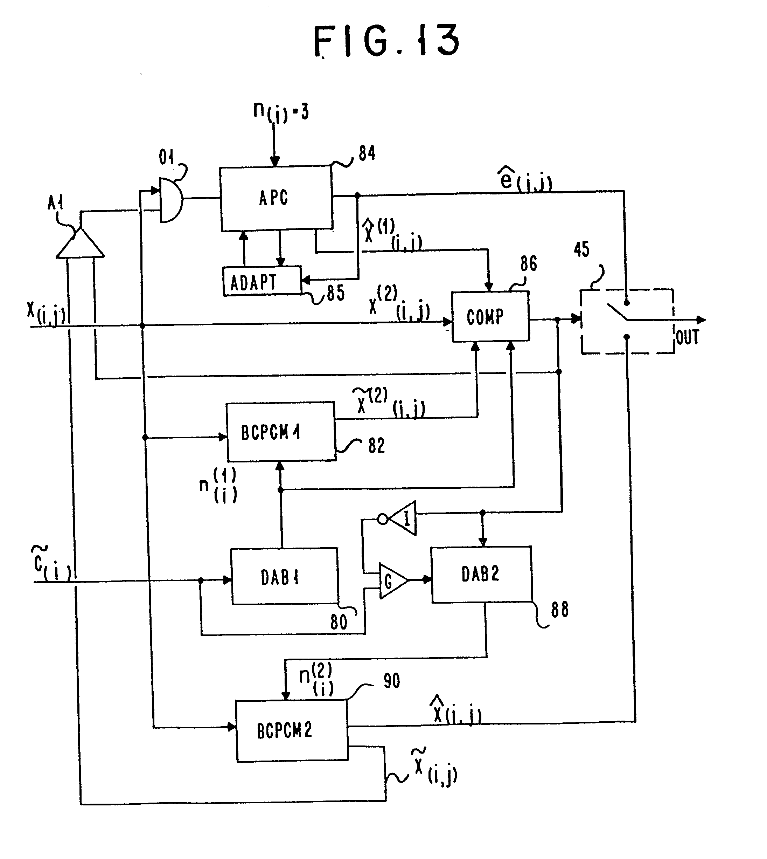

On a représenté sur la figure 13 un schéma de principe permettant d'expliquer les opérations de codage selon le processus que l'on vient de décrire. Comme on l'a vu, notamment à propos de la figure 9, chaque bloc d'échantillons (correspondant à 20 ms de signal) est trié pour en extraire des termes $C_{(i)}$ ou plutôt des termes $\tilde{C}_{(i)}$ obtenus après codage/décodage des $C_{(i)}$. Ces termes $\tilde{C}_{(i)}$ sont utilisés dans un dispositif DAB1, 80, fournissant des $n^1_{(i)}$ (l'indice 1 indiquant qu'il s'agit d'un premier traitement). Par exemple en effectuant l'opération

$$n^1_{(i)} = \frac{1}{6}\left[15 - \sum_{j=2}^{7} \log_2 \tilde{C}_{(j)}\right] + \log_2 \tilde{C}_{(i)}$$

Le terme $n^1_{(i)}$ règle le pas de quantification du codeur BCPCM 82 affecté à la $i^{ème}$ sous-bande. Les échantillons $X_{(i,j)}$ soumis à la requantification en BCPCM1 82 sont aussi soumis à un codage différentiel dans un codeur APC 84 avec son adaptateur 85 auquel on a affecté un nombre de bits fixe $n_k = 3$, c'est-à-dire que pour ce type de codage $n_{(i)} = n_k = 3$ quel que soit i. On a choisi ici 3 bits pour $n_k$, car l'expérience montre que l'on a pratiquement atteint, avec 3 bits le gain de codage le meilleur que l'on puisse espérer (gain asymptotique).

Toutefois, au lieu de procéder comme on l'avait indiqué à propos de la figure 9 où un comparateur choisissait entre les deux codeurs et commutait la sortie du dispositif sur le codeur choisi, ici, le comparateur 86 va organiser, le cas échéant, un second passage des $X_{(i,j)}$ dans les codeurs, grâce à des moyens (non représentés) de réaffectation de bits de quantification économisés par les codeurs des sous-bandes opérant en différentiel (APC).

Pour faciliter l'explication du fonctionnement subséquent, on va utiliser un exemple. Supposons que le premier passage dans les codeurs ait fourni les informations suivantes:

| i | 2 | 3 | 4 | 5 | 6 | 7 |
|---|---|---|---|---|---|---|
| bit MODE*$_{(1)}$ | 1 | 1 | 1 | 0 | 0 | 0 |
| $n^1_{(i)}$ | 5 | 2 | 0 | 4 | 3 | 1 |

\* 1 = choix du codeur APC
　0 = choix du codeur BCPCM

et l'indice (1) indique qu'il s'agit d'un premier passage des échantillons $X_{(i,j)}$ dans les codeurs APC 84 et BCPCM 82.

Le bit de MODE indique qu'après comparaison des résultats le codeur APC a été sélectionné pour les sous-bandes 2, 3 et 4, tandis que le codeur BCPCM est retenu pour les sous-bandes 5, 6 et 7.

Mais pour i=2, le codeur APC est en fait utilisé avec $n^1_{(2)} = n_k = 3$.

D'autre part, pour i=3 et 4, $n_{(i)} < 3$ on en déduit que le codage BCPCM serait préférable. Le bit mode correspondant est forcé à zéro.

Autrement dit, le groupe de bits mode devient (100 000) que l'on désignera par mot de MODE$_{(2)}$.

Le choix du codeur APC pour la 2ème sous-bande libère déjà 5−3=2 bits de codage. A ceci vient s'ajouter le fait que la transmission de $C_{(2)}$ n'étant pas nécessaire, les 4 bits de codage de $C_{(2)}$ sont eux aussi disponibles et correspondent, une fois répartis sur les N=5 échantillons du bloc, à 0,8 bit supplémentaire

$$\left(\frac{4}{N}\right).$$

Donc 2+0,8=2,8 bits supplémentaires sont à redistribuer à chaque instant d'échantillonnage entre les p'=5 sous-bandes pour lesquelles le bit MODE$_{(2)}$ est égal à zéro. Le nombre de bits de quantification disponibles pour le second passage des termes $X_{(i,j)}$ dans les codeurs de type BCPCM est donc:

$$M' = M - n_k \cdot p'' + \frac{4p}{N} = M + \left(\frac{4}{N} - n_k\right)p'' \quad (12)$$

où p'' est égal à la somme des bits MODE$_{(2)}$ égaux à 1, soit p''=1 dans l'exemple ci-dessus.

Dans l'exemple précédent:

$$M' = 15 + \left(\frac{4}{5} - 3\right) p'' = 12,8$$

Ce calcul peut être effectué dans le dispositif d'allocation dynamique de bits 88 désigné par DAB2 sur la figure 13. Partant de là, DAB2 redéfinit les bits à allouer aux codeurs BCPCM des sous-bandes 3, 4, 5, 6 et 7, à partir de la formule:

$$n_{(i)}^{(2)} = \frac{1}{p}, \left[M' - \sum_{j=3}^{7} \log_2 \tilde{C}_{(j)}\right] + \log_2 \tilde{C}_{(i)} \quad (13)$$

$$n_{(i)}^{(2)} = \frac{1}{5} \left[12,8 - \sum_{j=3}^{7} \log_2 \tilde{C}_{(j)}\right] + \log_2 \tilde{C}_{(i)} \quad (14)$$

où $i = 3, 4, 5, 6, 7$
et $p' = p - p'' = 5$ dans l'exemple précédent.

On pourrait aussi utiliser les procédés décrits dans les brevets cités plus haut pour redistribuer les 2,8 bits supplémentaires rendus disponibles entre les sous-bandes 3 à 7 sans recalculer les

$$n_{(i)}^{(2)}$$

à l'aide de la formule (14). Il faudra naturellement utiliser le même mode de détermination des termes

$$n_{(i)}^{(2)}$$

à la réception.
Les nouveaux termes:

$$n_{(3)}^{(2)}, \ n_{(4)}^{(2)}, \ n_{(5)}^{(2)}, \ n_{(6)}^{(2)} \text{ et } n_{(7)}^{(2)}$$

qui sont obtenus sont utilisés pour requantifier les échantillons des sous-bandes 3 à 7. L'exécution de ce deuxième codage a été symbolisée sur la figure 13 par un second codeur BCPCM2, 90. En pratique, on réutilisera le même codeur pour les fonctions BCPCM1 et BCPCM2.

Ce sont les termes $X_{(i,j)}$ obtenus par ce deuxième codage qui sont soumis au commutateur 45 commandé par le nouveau mot de six bits (100 000) représentant les bits MODE2, commutateur 45 recevant par ailleurs les termes $\hat{e}_{(i,j)}$ du codeur APC. On a représenté symboliquement par un inverseur I et une porte G, le fait que les bits MODE$_{(2)}$ égaux à zéro limitent l'action du dispositif DAB2 aux sous-bandes 3 à 7.

On notera en outre que bien que pour certaines sous-bandes (ici les sous-bandes $i = 3$ à 7) les codeurs différentiels (APC) ne soient pas utilisés, il est nécessaire que leurs coefficients $a_{(i,j-1)}$ soient néanmoins réajustés. Ce réajustement se fait d'une part en remettant dans les cellules à retard (T) des figures 6 et 7 les informations qu'elles contenaient avant le premier passage et d'autre part en faisant travailler le codeur de type APC de chaque sous-bande retenue pour être traitée en BCPCM, sur les échantillons $\check{X}_{(i,j)}$ fournis par le codeur BCPCM2 correspondant. A noter que ces termes $\check{X}_{(i,j)}$ qui sont d'ailleurs aussi disponibles au décodeur (voir figure 12) pourront donc être utilisés de la même manière pour ajuster l'adaptateur 63. C'est ce qui explique que l'on ait rebouclé la sortie fournissant les termes $\check{X}_{(i,j)}$ du codeur BCPCM2 sur l'entrée du codeur APC correspondant. Ce rebouclage passe par une porte ET, A1, commandée par le bit MODE(2) fourni par le comparateur 86. Un circuit logique OU, 01, placé après la porte A1 reçoit sur ses entrées soit les termes $\check{X}_{(i,j)}$ reconstitués en BCPCM2 soit les échantillons $X_{(i,j)}$.

On a représenté sur la figure 14 le schéma du format d'un bloc de bits qui sortiront du multiplexeur 28 (voir figure 1) pour chaque bloc d'échantillons représentant 20 ms de signal vocal codé. On y trouve tout d'abord deux mots (E1 et E2) de 4 bits chacun représentant deux informations d'énergie fournies par le canal ENERG à raison d'une information toutes les 10 ms. Ensuite viennent les coefficients PARCOR fournis par le prédicteur 14 sur le canal COEF (28 bits en tout). Puis viennent les 6 bits dits de MODE (un par sous-bande 2 à 7), suivis des termes caractéristiques des sous-bandes codées en BCPCM (4 bits par $\hat{C}_{(i)}$), et enfin les échantillons $\hat{X}_{(i,j)}$ ou $\hat{e}_{(i,j)}$ selon le cas.

**Revendications**

1. Procédé de codage numérique du signal vocal du genre dans lequel ledit signal est tout d'abord soumis à un codage de type prédictif fournissant un signal résiduel en bande de base, lequel est ensuite soumis à un codage en sous-bandes avec allocation dynamique des bits de quantification entre les sous-bandes, ledit procédé étant caractérisé en ce que le codage en sous-bandes comprend:
un traitement simultané du signal de chaque sous-bande pour un codage de type dit direct et un codage de type dit différentiel; une comparaison des qualités desdits codages directs et différentiels sur chacune desdites sous-bandes; un choix pour chaque sous-bande du type de codage de meilleure qualité.

2. Procédé de codage numérique du signal vocal selon la revendication 1, caractérisé en ce que ledit codage de type direct est un codage par blocs d'échantillons dit codage en BCPCM.

3. Procédé de codage numérique du signal vocal selon la revendication 2 caractérisé en outre en ce que ledit codage différentiel est de type prédictif adaptif dit APC.

4. Procédé de codage numérique selon la revendication 3, caractérisé en outre en ce que ledit traitement simultané du signal de chaque sous-bande est précédé d'une opération d'égalisation.

5. Procédé de codage numérique selon la revendication 4 caractérisé en ce que ladite égalisation comporte:
une détermination de l'enveloppe du signal de chaque sous-bande; et, une démodulation du signal de chaque sous-bande par ladite enveloppe.

6. Procédé de codage numérique du signal vocal selon l'une des revendications 1 à 5 caractérisé en ce que ladite allocation dynamique des bits de quantification entre les sous-bandes est utilisée pour les codages de type direct, les codages de type différentiel étant eux définis par un nombre de bits de quantification prédéterminé et constant.

7. Procédé de codage numérique selon la revendication 6 caractérisé en outre en ce que après un premier choix, pour chaque sous-bande, du type de codage à retenir, les bits de codage économisés par les sous-bandes traitées en différentiel, sont réaffectés aux sous-bandes traitées par codage direct, sous-bandes dont les contenus sont requantifiés.

8. Dispositif de codage numérique du signal vocal du genre comportant des moyens d'échantillonnage et de codage prédictif délivrant un signal résiduel en bande de base lequel est soumis à des moyens de codage en sous-bandes, lesdits moyens de codage en sous-bandes comprenant: un banc de filtres (30) recevant ledit signal résiduel en bande de base et le scindant en p signaux de sous-bandes; des moyens d'analyse (31) connectés audit banc de filtres et découpant le signal de chaque sous-bande en tronçons de durée prédéterminée donc contenant un bloc d'échantillons en nombre fixe et traitant chaque bloc pour en déduire un terme dit caractéristique BCPCM de sous-bande; des premiers moyens d'allocation dynamique de bits de quantification (33) reliés auxdits moyens d'analyse et déterminant, pour chaque tronçon de signal et pour chaque sous-bande, le nombre de bits à affecter à la quantification du bloc d'échantillons contenus dans ladite sous-bande; et, des moyens de codage des signaux de sous-bandes, lesdits moyens de codage étant caractérisés en ce qu'ils comportent: des moyens de codage dit direct (37) reliés audit banc de filtres, audits moyens d'analyse et auxdits premiers moyens d'allocation dynamique, lesdits moyens de codage direct procédant à une première requantification des échantillons de chaque sous-bande; des moyens de codage dit différentiel (37) reliés audit banc de filtres, auxdits moyens d'analyse et auxdits premiers moyens d'allocation dynamique, lesdits moyens de codage différentiel traitant le signal de chaque sous-bande selon les techniques dites de codage prédictif et requantifiant les échantillons de chaque sous-bande; des moyens de comparaison (37) reliés audit banc de filtres, aux moyens de codage direct et aux moyens de codage différentiel et engendrant une information dite de mode indiquant pour chaque sous-bande le moyen de codage à choisir compte tenu de critères de sélection prédéterminés; et des moyens de commutation commutant pour chaque sous-bande la sortie du dispositif de codage numérique sur le moyen de codage direct ou différentiel correspondant choisi par lesdits moyens de comparaison.

9. Dispositif de codage numérique selon la revendication 8 caractérisé en ce que lesdits moyens de codage direct utilisent les techniques de type dit BCPCM.

10. Dispositif de codage numérique selon la revendication 9 caractérisé en ce lesdits moyens de codage différentiel utilisent les techniques de codage de type dit APC.

11. Dispositif de codage numérique selon la revendication 10 caractérisé en ce que lesdits moyens de codage prédictif utilisent un nombre de bits de quantification prédéterminé et fixe.

12. Dispositif de codage numérique selon la revendication 11 caractérisé en ce qu'il comprend en outre:
des moyens de réaffectation reliés auxdits moyens de comparaison et évaluant le nombre de bits de quantification affectés par lesdits premiers moyens d'allocation dynamique de bits et non utilisés par les sous-bandes sélectionnées pour être codées en différentiel et de ce fait disponibles; des seconds moyens d'allocation dynamique des bits de quantification réaffectant lesdits bits disponibles entre les sous-bandes sélectionnées pour procéder à un codage de type direct; et, des moyens de requantification connectés auxdits seconds moyens d'allocation dynamique des bits et audit banc de filtres et procédant à une seconde requantification des échantillons des sous-bandes choisies pour procéder au codage de type direct; les échantillons ayant subi la seconde requantification étant retenus pour être appliqués auxdits moyens de commutation.

**Patentansprüche**

1. Verfahren zur Digitalcodierung des sprachsignals von der Art in der das genannte Signal zunächst einer sogenannten prädiktiven Codierung unterzogen wird, die im Stammband ein Restsignal liefert, das anschliessend eine Codierung in Unterbändern mit dynamischer Zuweisung der Quantisierungsbits zwischen den Unterbändern erfährt, wobei das genannte Verfahren dadurch gekennzeichnet ist, dass die Codierung in Unterbändern aufweist:
eine gleichzeitige Verarbeitung des Signals vom jeweiligen Unterband für eine sogenannte Direktcodierung und eine sogenannte Differentialcodierung, einen Vergleich, der Eigenschaften der genannten Direkt- und Differentialcodierungen in den jeweiligen Unterbändern, und für jedes Unterband die Wahl des besten Codierungstyps.

2. Verfahren zur Digitalcodierung des Sprachsignals nach Anspruch 1, dadurch gekennzeichnet, dass die genannte Direktcodierung eine sogenannte BCPCM-Codierung ist, d.h. eine Codierung durch Stichprobenblocks.

3. Verfahren zur Digitalcodierung des Sprachsignals nach Anspruch 1, zusätzlich dadurch gekennzeichnet, dass die genannte Differentialcodierung vom sogenannten APC-Typ, d.h. prädiktiv und adaptiv ist.

4. Verfahren zur Digitalcodierung nach Anspruch 3, zusätzlich dadurch gekennzeichnet, dass der genannten gleichzeitigen Signal-Verarbeitung des jeweiligen Unterbands ein Egalisierungsverfahren vorausgeht.

5. Verfahren zur Digitalcodierung nach Anspruch 4, dadurch gekennzeichnet, dass die genannte Egalisierung eine Bestimmung der Signalhülle des jeweiligen Unterbandes, sowie eine Demodulation des Signals des jeweiligen Unterbandes durch die genannte Hülle enthält.

6. Verfahren zur Digitalcodierung des Sprachsignals nach einem der Ansprüche 1 bis 5, dadurch gekennzeichnet, dass die genannte dynamische Zuweisung der Quantisierungsbits zwischen den Unterbändern für Direktcodierungen benutzt wird, wogegen die Differentialcodierungen durch eine vorgegebene und konstante Anzahl von Quantisierungsbits definiert werden.

7. Verfahren zur Digitalcodierung nach Anspruch 6, zusätzlich dadurch gekennzeichnet, dass nach einer ersten Auswahl des zurückzuhaltenden Codierungstyps für jedes Unterband, die von den differential verarbeiteten Unterbändern eingesparten Codierungsbits den durch Direktcodierung bearbeiteten Unterbändern neu zugewiesen werden, wobei der Inhalt dieser Unterbänder neu quantisiert wird.

8. Vorrichtung zur Digitalcodierung des Sprachsignals vom Typ, der Stückelungsmittel sowie Mittel zur prädiktiven Codierung enthält und im Stammband ein Restsignal abgibt, das Codierungsmitteln in Unterbändern vorgelegt wird, wobei die genannten Codierungsmittel in Unterbändern aufweisen:
eine Filterbank (30), die das genannte Restsignal im Stammband empfängt und es in p-Unterbandsignale aufteilt:
Analysiermittel (31), die an der genannten Filterbank angeschlossen sind, und das Signal des jeweiligen Unterbands in Abschnitte von vorgegebener Dauer unterteilen, die also einen Stichprobenblock in Festkommazahl enthält, und jeden Block verarbeitet, um davon ein Unterband-BCPCM-Merkmal genanntes Glied abzuleiten; erste Mittel zur dynamischen Zuweisung der Quantisierungsbits (33), die mit den genannten Analysiermitteln verbunden sind, und für jeden Signalabschnitt und jedes Unterband, die Anzahl der Quantisierung des Stichprobenblocks zuzuweisenden Bits bestimmen, die im genannten Unterband enthalten sind, sowie Codierungsmittel der Unterbandsignale, wobei die genannten Codierungsmittel dadurch gekennzeichnet sind, dass sie sogenannte Direktcodierungsmittel (37) enthalten, die mit der genannten Filterbank, den genannten Analysiermitteln und den genannten ersten Mitteln zur dynamischen Zuweisung verbunden sind, wobei die genannten Direktcodierungsmittel eine erste neue Quantisierung der Abtastwerte des jeweiligen Unterbands vornehmen; sogenannte Differentialcodierungsmittel (37), die mit der genannten Filterbank, den genannten Analysiermitteln und den genannten ersten Mitteln zur dynamischen Zuweisung verbunden sind, wobei die genannten Differentialcodierungsmittel das Signal des jeweiligen Unterbands nach den Verfahren der sogenannten prädiktiven Codierung behandeln und die Abtastwerte des jeweiligen Unterbands erneut quantisieren; Vergleichsmittel (37), die mit der genannten Filterbank, den genannten Direktcodierungsmitteln und den genannten Differentialcodierungsmitteln verbunden sind, und dabei eine sogenannte Modusinformation erzeugen, die für jedes Unterband unter Berücksichtigung vorgegebener Auswahlkriterien das auszuwählende Codierungsmittel angibt, und Übertragungsmittel, die für jedes Unterband den Ausgang der Vorrichtung zur Digitalcodierung mit dem entsprechenden Direktcodierungs-, bzw. Differentialcodierungsmittel verbindet, das durch die genannten Vergleichsmittel gewählt wurde.

9. Vorrichtung zur Digitalcodierung nach Anspruch 8, dadurch gekennzeichnet, dass die genannten Codierungsmittel die sogenannten BCPCM-Verfahren anwenden.

10. Vorrichtung zur Digitalcodierung nach Anspruch 9, dadurch gekennzeichnet, dass die genannten Differentialcodierungsmittel die sogenannten APC-Codierungsverfahren anwenden.

11. Vorrichtung zur Digitalcodierung nach Anspruch 10, dadurch gekennzeichnet, dass die Mittel zur prädiktiven Codierung eine vorgegebene und konstante Anzahl von Quantisierungsbits anwenden.

12. Vorrichtung zur Digitalcodierung nach Anspruch 11, dadurch gekennzeichnet, dass sie zusätzlich Neuzuweisungsmittel enthält, die mit den genannten Vergleichsmitteln verbunden sind, und die Anzahl der Quantisierungsbits schätzen, die von den genannten ersten dynamischen Zuweisungsmitteln zugewiesen wurden, und die von den ausgewählten Unterbändern zur Differentialcodierung nicht benutzt wurden und deswegen verfügbar sind; zweite Mittel zur dynamischen Zuweisung der Quantisierungsbits, die die genannten, zwischen den ausgewählten Unterbändern verfügbaren Bits neu zuweisen, um eine Direktcodierung durchzuführen, und Neuquantisierungsmittel, die mit den genannten zweiten Mitteln zur dynamischen Bitzuweisung sowie mit der genannten Filterbank verbunden sind, und eine zweite Neuquantisierung der Abtastwerte der zur Direktcodierung ausgewählten Unterbänder vornehmen; wobei die Stichproben, die einer zweiten Neuquantisierung unterzogen wurden, zurückgehalten werden, um den genannten Übertragungsmitteln überwiesen zu werden.

**Claims**

1. A method for digitally coding a voice signal, wherein said signal is first subjected to a predictive form of coding to provide a residual baseband signal that is then sub-band coded by dynamically allocating the quantizing bits to the sub-bands, said method being characterized in that said sub-band coding comprises the steps of:

simultaneously subjecting each sub-band signal to both direct and differential types of coding operations, comparing the respective qualities of said directly and differentially coded signals in each sub-band, and selecting the best quality coded signal in each sub-band.

2. A method for digitally coding a voice signal according to claim 1, further characterized in that said direct coding uses the so-called BCPCM technique that involves the coding of blocks of samples.

3. A method for digitally coding a voice signal according to claim 2, further characterized in that said differential coding is an adaptive predictive type of coding termed APC.

4. A digital coding method according to claim 3, further characterized in that said simultaneous coding of each sub-band signal is preceded by an equalization step.

5. A digital coding method according to claim 4, characterized in that said equalization step comprises the steps of:

determining the envelope of each sub-band signal, and demodulating each sub-band signal by means of said envelope.

6. A method for digitally coding a voice signal according to any one of claims 1 to 5, characterized in that said dynamic allocation of the quantizing bits to the sub-bands is used for the purposes of said direct type of coding operations while said differential type of coding operations are defined by a predetermined and constant number of quantizing bits.

7. A digital coding method according to claim 6, further characterized in that, after an initial selection of the type of sub-band signal coding to be used, the coding bits left over from the differential coding of sub-band signals are reallocated to the sub-bands whose signals are to be directly coded, the contents of said sub-bands being requantized.

8. A device for digitally coding voice signals, of the type comprising sampling and predictive coding means providing a residual baseband signal that is applied to sub-band signal coding means, said sub-band coding means including:

a bank of filters (30) for receiving said residual baseband signal and splitting same into «p» sub-band signals, analysis means (31) connected to said bank of filters for splitting each sub-band signal into segments of predetermined duration that consequently contain a block of samples, the number of samples being fixed, and for processing each block to derive therefrom a so-called BCPM sub-band characteristic term, first dynamic quantizing bit allocation means (33) connected to said analysis means and determining, for each signal sample and for each sub-band, the number of bits to be allocated to quantize the block of samples within said sub-band, and sub-band signal coding means, said coding means being characterized in that it comprises; so-called direct coding means (37) connected to said bank of filters, to said analysis means and to said first dynamic allocation means, for performing a first requantization of the samples in each sub-band, so-called differential coding means (37) connected to said bank of filters, to said analysis means and to said first dynamic allocation means, for processing each sub-band signal in accordance with predictive coding techniques and for requantizing the samples in each sub-band, comparison means (37) connected to said bank of filters, to said direct coding means and to said differential coding means, for generating a so-called mode information item that indicates for each sub-band the coding means to be selected, taking predetermined selection criteria into account, and switching means which switches, for each sub-band, the output of the digital coding device to the corresponding direct or differential coding means selected by said comparison means.

9. A digital coding device according to claim 8, characterized in that said direct coding means uses BCPCM-type coding techniques.

10. A digital coding device according to claim 9, characterized in that said differential coding means uses APC-type coding techniques.

11. A digital coding device according to claim 10, characterized in that said predictive coding means uses a fixed and predetermined number of quantizing bits.

12. A digital coding device according to claim 11, further characterized in that it comprises:

reallocation means connected to said comparison means for evaluating the number of quantizing bits allocated by said first dynamic bit allocation means and not used by the sub-bands selected for the purposes of differential coding operations, said bits being, therefore, available, second dynamic quantizing bit allocation means for reallocating said available bits to the sub-bands selected for the purposes of direct coding operations, and requantization means connected to said second dynamic bit allocation means and to said bank of filters for carrying out a second requantization of the samples in the sub-bands selected for the purposes of direct coding operations, the samples subjected to said second requantization being applied to said switching means.

FIG. 1B

FIG. 1A

# FIG. 2

SBC
22

# FIG. 3

# FIG. 4

# FIG.5

# FIG.8

# FIG.6

ADAPT

$\widetilde{e}(i,j)$

$\widehat{x}(i-j)$

$a(i, j+1,1)$

$P(i,j+1)$

# FIG. 7

ADAPT

$\widehat{e}(i,j-1)$

TABLE 1

$q(i, j)$

0,5

21

FIG.9

FIG. 11

# FIG. 10

# FIG. 14

| E1, E2 | K1, K2 ---- K8 | MODE BITS | $\hat{c}(i)$ | $\hat{x}(i,j)$ , $\hat{e}(i,j)$ |
|--------|----------------|-----------|--------------|----------------------------------|

# FIG. 12

FIG.13